(19) **Europäisches Patentamt / European Patent Office / Office européen des brevets**

(11) **EP 1 635 525 B1**

(12) **EUROPEAN PATENT SPECIFICATION**

(45) Date of publication and mention
of the grant of the patent:
**01.08.2007   Bulletin 2007/31**

(51) Int Cl.:
**H04L 25/02** (2006.01)

(21) Application number: **05111738.0**

(22) Date of filing: **05.01.2001**

(54) **Channel estimation for time division duplex communication systems**

Kanalschätzung für ein Zeitduplexkommunikationssystem

Estimation de canal pour un système de communication duplex à répartition dans le temps

(84) Designated Contracting States:
**AT BE CH CY DE DK ES FI FR GB GR IE IT LI LU MC NL PT SE TR**

(30) Priority: **07.01.2000   US 175167 P**

(43) Date of publication of application:
**15.03.2006   Bulletin 2006/11**

(60) Divisional application:
**07110145.5**

(62) Document number(s) of the earlier application(s) in accordance with Art. 76 EPC:
**04006212.7 / 1 437 869**
**01901796.1 / 1 245 100**

(73) Proprietor: **INTERDIGITAL TECHNOLOGY CORPORATION**
**Wilmington, DE 19801 (US)**

(72) Inventor: **Zeira, Ariela**
**Huntington, NY New York 11743 (US)**

(74) Representative: **Engdahl, Stefan**
**AWAPATENT AB**
**P.O. Box 45086**
**104 30 Stockholm (SE)**

(56) References cited:
• **STEINER B ET AL: "OPTIMUM AND SUBOPTIMUM CHANNEL ESTIMATION FOR THE UPLINK OF CDMA MOBILE RADIO SYSTEMS WITH JOINT DETECTION" EUROPEAN TRANSACTIONS ON TELECOMMUNICATIONS AND RELATED TECHNOLOGIES, AEI, MILANO, IT, vol. 5, no. 1, 1994, pages 39-50, XP000445714 ISSN: 1120-3862**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 635 525 B1**

**Description**

BACKGROUND

The invention generally relates to wireless communication systems. In particular, the invention relates to channel estimation in a wireless communication system.

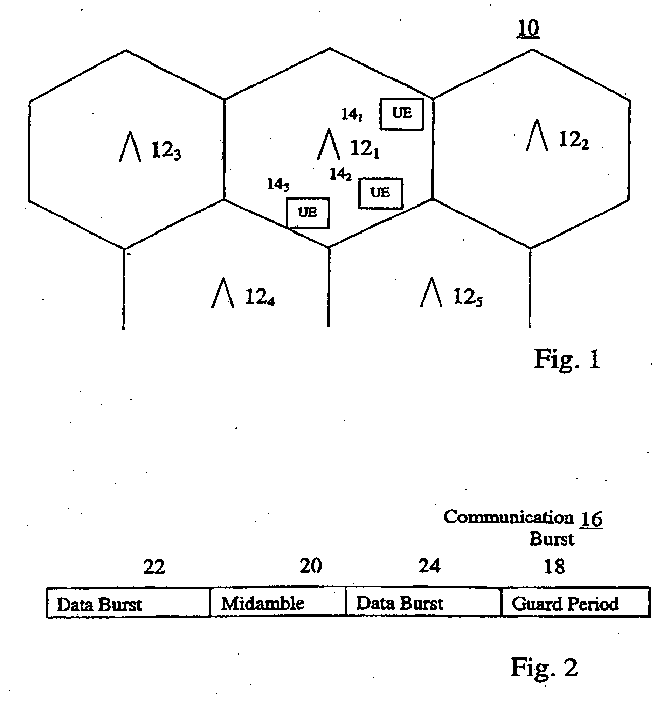

Figure 1 is an illustration of a wireless communication system 10. The communication system 10 has base stations $12_1$ to $12_5$ which communicate with user equipments (UEs) $14_1$ to $14_3$. Each base station 12, has an associated operational area where it communicates with UEs $14_1$ to $14_3$ in its operational area.

In some communication systems, such as code division multiple access (CDMA) and time division duplex using code division multiple access (TDD/CDMA), multiple communications are sent over the same frequency spectrum. These communications are typically differentiated by their chip code sequences. To more efficiently use the frequency spectrum, TDD/CDMA communication systems use repeating frames divided into time slots for communication. A communication sent in such a system will have one or multiple associated chip codes and time slots assigned to it based on the communication's bandwidth.

Since multiple communications may be sent in the same frequency spectrum and at the same time, a receiver in such a system must distinguish between the multiple communications. One approach to detecting such signals is single user detection. In single user detection, a receiver detects only the communications from a desired transmitter using a code associated with the desired transmitter, and treats signals of other transmitters as interference. Another approach is referred to as joint detection. In joint detection, multiple communications are detected simultaneously.

To utilize these detection techniques, it is desirable to have an estimation of the wireless channel in which each communication travels. In a typical TDD system, the channel estimation is performed using midamble sequences in communication bursts.

"Optimum and Suboptimum Channel Estimation for the Uplink of CDMA Mobile Radio Systems with Joint Detection" by Steiner et al. describes a CDMA system which estimates the channel using the received mid-amble sequences and a constructed right-circulant matrix

A typical communication burst 16 has a midamble 20, a guard period 18 and two data bursts 22, 24, as shown in figure 2. The midamble 20 separates the two data bursts 22, 24 and the guard period 18 separated the communication bursts 16 to allow for the difference in arrival times of bursts 16 transmitted from different transmitters. The two data bursts 22,24 communication burst's data. The midamble 20 contains a training sequence for use in channel estimation.

After a receiver receives a communication burst 16, it estimates the channel using the received midamble sequence. When a receiver receives multiple bursts 16 in a time slot, it typically estimates the channel for each burst 16. One approach for such channel estimation for communication bursts 16 sent through multiple channels is a Steiner Channel Estimator. Steiner Channel Estimation is typically used for uplink communications from multiple UEs, $14_1$ to $14_3$, where the channel estimator needs to estimate multiple channels.

In some situations, multiple bursts 16 experience the same wireless channel. One case is a high data rate service, such as a 2 megabits per second (Mbps) service. In such a system, a transmitter may transmit multiple bursts in a single time slot. Steiner estimation can be applied in such a case by averaging the estimated channel responses from all the bursts 16. However, this approach has a high complexity. Accordingly, it is desirable to have alternate approaches to channel estimation.

SUMMARY

A single transmitter transmits K communication bursts, whereby $K \geq 2$, in a shared spectrum in a time slot of a time division duplex communicaton system. The system associated with N midainble sequences. Each burst has an associated midamble sequence. A receiver receives a vector corresponding to the transmitted midamble sequences of the K communication bursts. A matrix having N identical right circulant matrix blocks is constructed based in part on the known N midamble sequences. The wireless channel between the transmitter and receiver is estimated based on in part one of the N blocks and the received vector.

BRIEF DESCRIPTION OF THE DRAWING(S)

Figure 1 is a wireless communication system.
Figure 2 is an illustration of a communication burst.
Figure 3 is a simplified multiburst transmitter and receiver.
Figure 4 is a flow chart of multiburst channel estimation.

DETAILED DESCRIPTION OF THE PREFERRED EMBODIMENT(S)

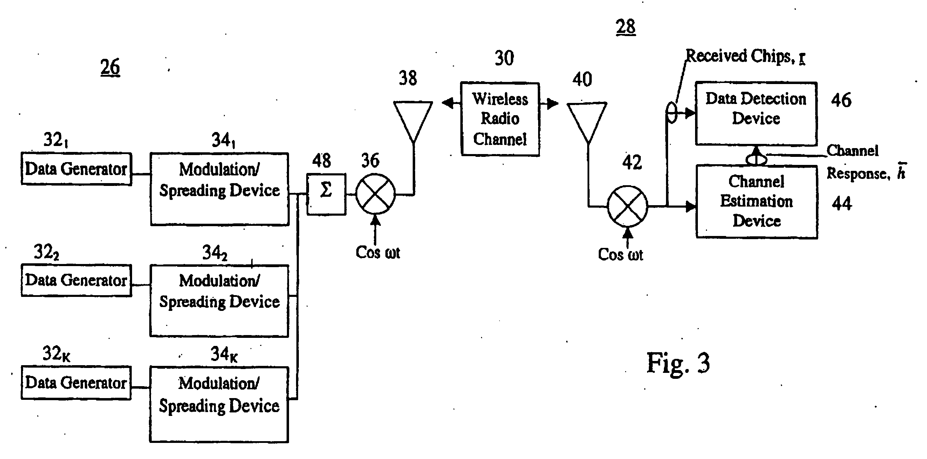

Figure 3 illustrates a simplified multicode transmitter 26 and receiver 28 in a TDD/CDMA communication system. In a preferred application, such as a 2 Mbs downlink service, the receiver 28 is in a UE $14_1$ and the transmitter 26 is in a base station $12_1$, although the receiver 28 and transmitter 26 may be used in other applications.

The transmitter 26 sends data over a wireless radio channel 30. The data is sent in K communication bursts. Data generators $32_1$ to $32_K$ in the transmitter 26 generate data to be communicated to the receiver 28. Modulation/ spreading and training sequence insertion devices $34_1$ to $34_K$ spread the data and make the spread reference datatime-multiplexed with amidamble training sequence in the appropriate assigned time slot and codes for spreading the data, producing the K communication bursts. Typical values of K for a base station 12, transmitting downlink bursts are from 2 to 16. The communication bursts are combined by a combiner 48 and modulated by a modulator 36 to radio frequency (RF). An antenna 38 radiates the RF signal through the wireless radio channel 30 to an antenna 40 of the receiver 28. The type of modulation used for the transmitted communication can be any of those known to those skilled in the art, such as binary phase shift keying (BPSK) or quadrature phase shift keying (QPSK).

The antenna 40 of the receiver 28 receives various radio frequency signals. The received signals are demodulated by a demodulator 42 to produce a baseband signal. The baseband signal is processed, such as by a channel estimation device 44 and a data detection device 46, in the time slot and with the appropriate codes assigned to the transmitted communication bursts. The data detection device 46 may be a multiuser detector or a single user detector. The channel estimation device 44 uses the midamble training sequence component in the baseband signal to provide channel information, such as channel impulse responses. The channel information is used by the data detection device 46 to estimate the transmitted data of the received communication bursts as hard symbols.

To illustrate one implementation of multiburst channel estimation, the following midamble type is used, although multiburst channel estimation is applicable to other midamble types. The K midamble codes, $\underline{m}^{(k)}$, where k = 1...K, are derived as time shifted versions of a periodic single basic midamble codes $\underline{m}_P$, of period P chips. The length of each midamble code is $L_m = P + W$-1. W is the length of the user channel impulse response. Typical values for $L_m$ are 256 and 512 chips. W is the length of the user channel impulse response. Although the following discussion is based on each burst having a different midamble code, some midambles may have the same code. As, a result, the analysis is based on N midamble codes, N < K. Additionally, the system may have a maximum number of acceptable midamble codes N. The receiver 28 in such a system may estimate the channel for the N maximum number of codes, even if less than N codes are transmitted

The elements of $\underline{m}_P$ take values from the integer set {1,-1}. The sequence $\underline{m}_P$ is first converted to a complex sequence $\underline{\tilde{m}}_p[i] = j^i \cdot m_P[i]$, where $i = 1 \cdots P$. The $\underline{m}^{(k)}$ are obtained by picking K sub-sequences of length $L_m$ from a 2P long sequence formed by concatenating two periods of $m_P$. The $i^{th}$ element of $\underline{\tilde{m}}^{(k)}$ is related to $\underline{m}_P$ by Equation 1.

$$
\begin{aligned}
\underline{m}_i^{(k)} &= \tilde{m}_P\big[(K-k)W+i\big], & \text{for } 1 \leq i \leq P-(K-k)W \\
&= \tilde{m}_P\big[i-P+(K-k)W\big], & \text{for } P-(K-k)W \leq i \leq P+W-1
\end{aligned}
$$

$$\text{Equation 1}$$

Thus, the starting point of $\underline{m}^{(k)}, k = 1...K$ shifts to the right by W chips as $k$ increases from 1 to $K$.

The combined received midamble sequences are a superposition of the $K$ convolutions. The $k^{th}$ convolution represents the convolution of $\underline{m}^{(k)}$ with $\overline{h}^{(k)}$. $\overline{h}^{(k)}$ is the channel response of the $k^{th}$ user. The preceding data field in the burst corrupts the first ($W$-1) chips of the received midamble. Hence, for the purpose of channel estimation, only the last P of $L_m$ chips are used to estimate the channel.

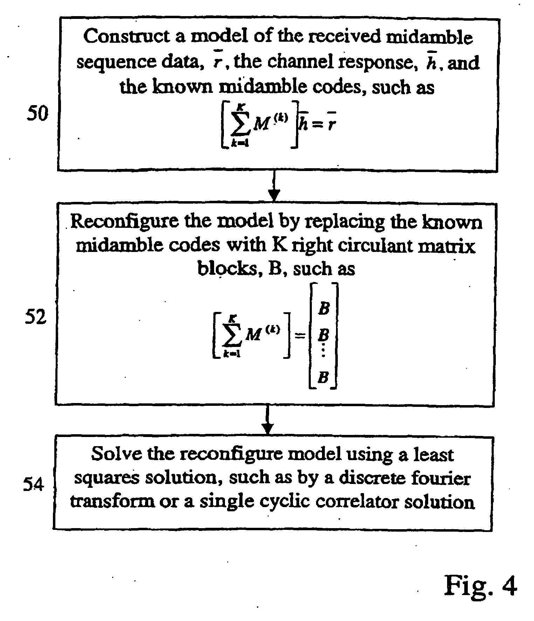

Multiburst channel estimation will be explained in conjunction with the flow chart of Figure 4. To solve for the individual channel responses $\overline{h}^{(k)}$, Equation 2 is used.

$$\begin{bmatrix} m_P & \cdots & m_{(K-1)W+1} & m_{(K-1)W} & \cdots & m_{(K-2)W+1} & & m_W & \cdots & m_1 \\ m_1 & \cdots & m_{(K-1)W+2} & m_{(K-1)W+1} & \cdots & m_{(K-2)W+2} & & m_{W+1} & \cdots & m_2 \\ m_2 & \cdots & m_{(K-1)W+3} & m_{(K-1)W+2} & \cdots & m_{(K-2)W+3} & \cdots & m_{W+2} & \cdots & m_3 \\ \vdots & \vdots & \vdots & \vdots & \vdots & \vdots & & \vdots & \vdots & \vdots \\ m_{KW-1} & \vdots & m_{(K-1)W} & m_{(K-1)W-1} & \cdots & m_{(K-2)W} & & m_{W-1} & & m_P \end{bmatrix} \times \begin{bmatrix} \overline{h}^{(1)} \\ \overline{h}^{(2)} \\ \vdots \\ \overline{h}^{(K)} \end{bmatrix} = \begin{bmatrix} r_W \\ r_{W+1} \\ r_{W+2} \\ \vdots \\ r_{L_m} \end{bmatrix}$$

**Equation 2**

$r_W \cdots r_{LM}$ are the received combined chips of the midamble sequences. The m values are the elements of $\underline{m_P}$.
Equation 2 may also be rewritten in shorthand as Equation 3.

$$\sum_{k=1}^{K} M^{(k)} \overline{h^{(k)}} = \overline{r}$$

**Equation 3**

Each $M^{(k)}$ is a KW-by-W matrix. $\overline{r}$ is the received midamble chip responses. When all the bursts travel through the same channel, $\overline{h}^{(1)} \ldots \overline{h}^{(K)}$ can be replaced by $\overline{h}$ as in Equation 4, 50.

$$\left[ \sum_{k=1}^{K} M^{(k)} \right] \overline{h} = \overline{r}$$

**Equation 4**

G is defined as per Equation 5.

$$G = \left[ M^{(1)}, \ldots, M^{(k)}, \ldots, M^{(K)} \right]$$

**Equation 5**

As a result, G is a KW-by-KW matrix. Since G is a right circulant matrix, Equation 4 can be rewritten using K identical right circulant matrix blocks B, as per Equation 6, 52.

$$\left[ \sum_{k=1}^{K} M^{(k)} \right] = \begin{bmatrix} B \\ B \\ \vdots \\ B \end{bmatrix} = D$$

**Equation 6**

B is a W-by-W right circulant matrix. The number of B-blocks is K. Using Equation 6, Equation 4 can be rewritten as Equation 7.

$$D\bar{h} = \bar{r} \qquad \qquad \text{Equation 7}$$

Equation 7 describes an over-determined system with dimensions KW-by-W. One approach to solve Equation 7 is a least squares solution, 54. The least squares solution of Equation 7 is given by Equation 8.

$$\hat{\bar{h}} = \left(D^H D\right)^{-1} D^H \bar{r} \qquad \qquad \text{Equation 8}$$

$D^H$ is the Hermitian of D

Applying Equation 6 to Equation 8 results in Equation 9.

$$\left(D^H D\right)^{-1} = \frac{1}{K}\left(B^H B\right)^{-1} \qquad \qquad \text{Equation 9}$$

The received vector $\bar{r}$ of dimension KW can be decomposed as per Equation 10.

$$\bar{r} = \begin{bmatrix} \bar{r}_1 \\ \bar{r}_2 \\ \vdots \\ \bar{r}_k \end{bmatrix} \qquad \qquad \text{Equation 10}$$

The dimension of $\bar{r}_k$ is W. Substituting Equations 9 and 10 into Equation 8, the least-squares solution for the channel coefficients per Equation 11 results.

$$\hat{\bar{h}} = \left(B^H B\right)^{-1} B^H \left(\frac{1}{K}\sum_{k=1}^{K} \bar{r}_k\right) = \left(B^H B\right)^{-1} B^H \bar{\bar{r}}_k \qquad \qquad \text{Equation 11}$$

$\bar{r}_k$ represents the average of the segments of $\bar{r}$. Since B is a square matrix. Equation 11 becomes Equation 12.

$$\hat{\bar{h}} = B^{-1} \bar{\bar{r}}_k \qquad \qquad \text{Equation 12}$$

Since B is a right circulant matrix and the inverse of a right circulant matrix is also right circulant, the channel estimator can be implemented by a single cyclic correlator of dimension 57, or by a discrete fourier transform (DFT) solution.

A W point DFT method is as follows. Since B is right circulant, Equation 13 can be used.

$$B = D_W^{-1} \cdot \Lambda_C \cdot D_W \qquad \qquad \text{Equation 13}$$

$D_W$ is the W point DFT matrix as per Equation 14.

$$D_W = \begin{bmatrix} \tilde{W}^0 & \tilde{W}^0 & \tilde{W}^0 & \tilde{W}^0 & \cdots & \tilde{W}^0 \\ \tilde{W}^0 & \tilde{W}^1 & \tilde{W}^2 & \tilde{W}^3 & \cdots & \tilde{W}^{(W-1)} \\ \tilde{W}^0 & \tilde{W}^2 & \tilde{W}^4 & \tilde{W}^6 & \cdots & \tilde{W}^{2(W-1)} \\ \tilde{W}^0 & \tilde{W}^3 & \tilde{W}^6 & \tilde{W}^9 & \cdots & \tilde{W}^{3(W-1)} \\ \vdots & \vdots & \vdots & \vdots & \cdots & \vdots \\ \tilde{W}^0 & \tilde{W}^{(W-1)} & \tilde{W}^{2(W-1)} & \tilde{W}^{3(W-1)} & \cdots & \tilde{W}^{(W-1)(W-1)} \end{bmatrix} \qquad \text{Equation 14}$$

$\Lambda_C$ is a diagonal matrix whose main diagonal is the DFT of the first column of B, as per Equation 15.

$$\Lambda_C = diag\big(D_W\big(B(:,1)\big)\big) \qquad \text{Equation 15}$$

$\tilde{W} = e^{-j\frac{2\pi}{W}}$. Thus, $D_W$ is the DFT operator so that $D_W\underline{x}$ represents the W point DFT of the vector $\underline{x}$. By substituting Equation 13 into Equation 12 and using $D_W^{-1} = \dfrac{D_W^{\bullet}}{W}$, results in Equation 16.

$$\bar{h} = \left( D_W^{\bullet} \cdot \frac{1}{W} \cdot \Lambda_C^{-1} \cdot D_W \right) \bar{r} \qquad \text{Equation 16}$$

$D_W^{\bullet}$ is the element-by-element complex conjugate of $D_W$.

Alternately, an equivalent form that expresses $\bar{h}$ in terms of $\Lambda_R$ instead of $\Lambda_C$ can be derived. $\Lambda_R$ is a diagonal matrix whose main diagonal is the DFT of the first row of B per Equation 17.

$$\Lambda_R = diag\big(D_W\big(B(1,:)\big)\big) \qquad \text{Equation 17}$$

Since the transpose of B, $B^T$, is also right circulant and that its first column is the first row of B, $B^T$ can be expressed by Equation 18.

$$B^T = D_W^{-1} \cdot \Lambda_R \cdot D_W \qquad \text{Equation 18}$$

Using Equation 18 and that $D_W^T = D_W$, $\Lambda_R^T = \Lambda_R$ and that for any invertible matrix $A$, $(A^T)^{-1} = (A^{-1})^T$, B can be expressed as per Equation 19.

$$B = D_W \cdot \Lambda_R \cdot D_W^{-1} \qquad \text{Equation 19}$$

Substituting Equation 19 into Equation 12 and that $D_W^{-1} = \dfrac{D_W^*}{W}$ results in Equation 20.

$$\bar{h} = \left( D_W \cdot \Lambda_R^{-1} \cdot \frac{1}{W} D_W^* \right) \bar{r} \qquad \text{Equation 20}$$

Equations 16 or 20 can be used to solve for $\bar{h}$. Since all DFTs are of length W, the complexity in solving the equations is dramatically reduced.

An approach using a single cycle correlator is as follows. Since $B^{-1}$ is the inverse of a right circulant matrix, it can be written as Equation 21.

$$B^{-1} = T = \begin{bmatrix} T_1 & T_P & \cdots & T_3 & T_2 \\ T_2 & T_1 & \cdots & T_4 & T_3 \\ \vdots & \vdots & \cdots & \vdots & \vdots \\ T_{W-1} & T_{W-2} & \cdots & T_1 & T_W \\ T_W & T_{W-1} & \cdots & T_2 & T_1 \end{bmatrix} \qquad \text{Equation 21}$$

The first row of the matrix T is equal to the inverse DFT of the main diagonal of $\Lambda_R^{-1}$. Thus, the matrix T is completely

determined by $\Lambda_R^{-1}$.

The taps of the channel response $\bar{h}$ are obtained successively by an inner product of successive rows of T with the average of W-length segments of the received vector $\bar{r}$. The successive rows of T are circularly right shifted versions of the previous row. Using registers to generate the inner product, the first register holds the averaged segments of $\bar{r}$, and the second register is a shift register that holds the first row of the matrix T. The second register is circularly shifted at a certain clock rate. At each cycle of the clock, a new element of $\bar{h}$ is determined by the inner product of the vectors stored in the two registers. It is advantageous to shift the first row of the matrix T rather than the received midambles. As a result, no extra storage is required for the midambles. The midambles continue to reside in the received buffer that holds the entire burst. Since the correlator length is only W, a significant reduction in complexity of estimating the channel is achieved.

**Claims**

1. A wireless spread spectrum communication system using code division multiple access, the system communicating using communication bursts, each burst having an associated midamble sequence, the system comprising:

   a base station comprising:

   a data generator for generating data;
   a plurality of modulation/spreading devices for formatting the generated data into K communication bursts, where K≥2, time multiplexed to be in a same time slot and in a shared spectrum; and

an antenna for radiating the K communication bursts; and

a user equipment that knows the midamble sequences of the K bursts, and that includes an antenna for receiving the K communication bursts including a vector corresponding to the transmitted midamble sequences of the bursts; a channel estimator for constructing a matrix and estimating the wireless channel between the base station and the user equipment based on, in part, the constructed matrix and the received vector; and a data detector for recovering data from the received communication bursts using the estimated wireless channel, **characterized by**

said channel estimator being adapted to construct the matrix used for estimating the wireless channel by constructing a matrix having K identical right circulant matrix blocks based in part on the known K midamble sequences.

2. The system of claim 1 wherein the data detector is a multiuser detector.

3. The system of claim 1 wherein the data detector is a single user detector.

4. The system of claim 1 wherein the data detector is a plurality of single user detectors.

5. The system of claim 1 wherein the wireless channel estimating is performed using a least squares solution.

6. The system of claim 5 wherein the least squares solution is implemented using a discrete Fourier transform solution.

7. The system of claim 5 wherein the least squares solution is implemented using a single cyclic correlator.

8. The system of claim 1 wherein the base station is effectively transmitting data at a 2 Mbps data rate to the user equipment.

9. A user equipment for communication in a code division multiple access format, wherein the user equipment receives K communication bursts, $K \geq 2$, in a shared spectrum system time slot, each burst having an associated midamble sequence, wherein the user equipment knows the midamble sequences of the K bursts, and wherein the user equipment includes an antenna for receiving the K communication bursts including a vector corresponding to the transmitted midamble sequences of the bursts; a channel estimator for constructing a matrix and estimating the wireless channel between the base station and the user equipment based on, in part, the constructed matrix and the received vector; and a data detector for recovering data from the received communication bursts using the estimated wireless channel, **characterized by**

said channel estimator being adapted to construct the matrix used for estimating the wireless channel by constructing a matrix having K identical right circulant matrix blocks based in part on the known K midamble sequences.

10. The user equipment of claim 9 wherein the data detector is a multiuser detector.

11. The user equipment of claim 9 wherein the data detector is a single user detector.

12. The user equipment of claim 9 wherein the wireless channel estimating is performed using a least squares solution.

13. The user equipment of claim 12 wherein the least squares solution is implemented using a discrete Fourier transform solution.

14. The user equipment of claim 12 wherein the least squares solution is implemented using a single cyclic correlator.

**Patentansprüche**

1. Drahtloses Spreizspektrum-Kommunikationssystem, in dem ein Codemultiplex-Vielfachzugriffsverfahren verwendet wird, wobei das System Kommunikationen unter Verwendung von Kommunikationsbursts ausführt und wobei jeder Burst eine zugeordnete Midamble-Sequenz aufweist, wobei das System aufweist:

eine Basisstation, die aufweist:

einen Datengenerator zum Erzeugen von Daten;

mehrere Modulations-/Spreizeinrichtungen zum Formatieren der erzeugten Daten in K Kommunikationsbursts, wobei K ≥ 2, die derart zeitlich gemultiplext sind, dass sie im gleichen Zeitschlitz und in einem gemeinsamen Spektrum angeordnet sind; und

eine Antenne zum Aussenden der K Kommunikationsbursts; und

eine Benutzereinrichtung, die die Midamble-Sequenzen der K Kommunikationsbursts kennt und die eine Antenne zum Empfangen der K Kommunikationsbursts, die einen Vektor enthalten, der den übertragenen Midamble-Sequenzen der Bursts entspricht, enthält;

eine Kanalschätzeinrichtung zum Konstruieren einer Matrix und zum Schätzen des Funkkanals zwischen der Basisstation und der Benutzereinrichtung basierend teilweise auf der konstruierten Matrix und dem empfangenen Vektor; und

einen Datendetektor zum Wiedergewinnen von Daten von den empfangenen Kommunikationsbursts unter Verwendung des geschätzten Funkkanals, **dadurch gekennzeichnet, dass**

die Kanalschätzeinrichtung dazu geeignet ist, die Matrix zu konstruieren, die für die Schätzung des Funkkanals verwendet wird, durch Konstruieren einer Matrix mit K identischen rechtszyklischen Matrixblöcken basierend teilweise auf den bekannten K Midamble-Sequenzen.

2. System nach Anspruch 1, wobei der Datendetektor ein Mehrbenutzer-Detektor ist.

3. System nach Anspruch 1, wobei der Datendetektor ein Einbenutzer-Detektor ist.

4. System nach Anspruch 1, wobei der Datendetektor eine Mehrzahl von Einbenutzer-Detektoren ist.

5. System nach Anspruch 1, wobei die Funkkanalschätzung unter Verwendung einer Methode der kleinsten Quadrate ausgeführt wird.

6. System nach Anspruch 4, wobei die Methode der kleinsten Quadrate unter Verwendung einer diskreten Fourier-Transformation ausgeführt ist.

7. System nach Anspruch 4, wobei die Methode der kleinsten Quadrate unter Verwendung eines einzelnen zyklischen Korrelators ausgeführt ist.

8. System nach Anspruch 1, wobei die Basisstation Daten mit einer Datenrate von 2 Mbps an die Benutzereinrichtung effektiv überträgt.

9. Benutzergerät, das in einem Codemultiplex-Vielfachzugriff-Format kommuniziert, wobei das Benutzergerät K Kommunikationsbursts, mit K ≥ 2, in einem gemeinsam genutzten Spektrum in einem Zeitschlitz empfängt, wobei jeder Burst eine zugeordnete Midamble-Sequenz aufweist, wobei das Benutzergerät die Midamble-Sequenzen der K Bursts kennt, und wobei das Benutzergerät eine Antenne zum Empfangen der K Kommunikationsbursts aufweist, die einen Vektor enthalten, der den übertragenen Midamble-Sequenzen der Bursts entspricht, eine Kanalschätzeinrichtung zum Konstruieren einer Matrix und zum Schätzen des Funkkanals zwischen der Basisstation und dem Benutzergerät basierend teilweise auf der konstruierten Matrix und dem empfangenen Vektor, und einen Datendetektor zum Wiedergewinnen von Daten von den empfangenen Kommunikationsbursts unter Verwendung des geschätzten Funkkanals, **dadurch gekennzeichnet, dass**

die Kanalschätzeinrichtung eingerichtet ist, die Matrix zu konstruieren, die für die Schätzung des Funkkanals verwendet wird, durch Konstruieren einer Matrix mit K identischen rechtszyklischen Matrixblöcken basierend teilweise auf den bekannten K Midamble-Sequenzen.

10. Benutzergerät nach Anspruch 9, wobei der Datendetektor ein Mehrbenutzer-Detektor ist.

11. Benutzergerät nach Anspruch 9, wobei der Datendetketor ein Einbenutzer-Detektor ist.

12. Benutzergerät nach Anspruch 9, wobei die Funkkanalschätzung unter Verwendung einer Methode der kleinsten Quadrate ausgeführt wird.

13. Benutzergerät nach Anspruch 12, wobei die Methode der kleinsten Quadrate unter Verwendung einer diskreten Fourier- Transformation ausgeführt ist.

**14.** Benutzergerät nach Anspruch 12, wobei die Methode der kleinsten Quadrate unter Verwendung eines einzelnen zyklischen Korrelators ausgeführt ist.

**Revendications**

**1.** Système de communication par étalement du spectre sans fil utilisant un accès multiple par répartition en code, le système communiquant en utilisant des salves de communication, chaque salve ayant une séquence intermédiaire associée, le système comprenant :

une station de base comprenant :

un générateur de données permettant de générer des données ;
une pluralité de dispositifs de modulation/étalement permettant de formater les données générées en K salves de communication, où $K \geq 2$, multiplexées dans le temps pour se trouver dans la même tranche de temps et dans un spectre partagé ; et
une antenne permettant de rayonner les K salves de communication ; et
un équipement utilisateur qui connaît les séquences intermédiaires des K salves, et qui comporte une antenne permettant de recevoir les K salves de communication comportant un vecteur correspondant aux séquences intermédiaires transmises des salves ; un estimateur de canal permettant d'élaborer une matrice et d'estimer le canal sans fil entre la station de base et l'équipement utilisateur en fonction, en partie, de la matrice élaborée et du vecteur reçu ; et un détecteur de données permettant de récupérer les données des salves de communication reçues en utilisant le canal sans fil estimé, **caractérisé en ce que** :

ledit estimateur de canal est conçu pour élaborer la matrice utilisée pour estimer le canal sans fil en élaborant une matrice ayant K blocs de matrice circulante droite identiques en fonction en partie des K séquences intermédiaires connues.

**2.** Système selon la revendication 1, dans lequel le détecteur de données est un détecteur multiutilisateur.

**3.** Système selon la revendication 1, dans lequel le détecteur de données est un détecteur d'utilisateur unique.

**4.** Système selon la revendication 1, dans lequel le détecteur de données correspond à une pluralité de détecteurs d'utilisateur unique.

**5.** Système selon la revendication 1, dans lequel l'estimation de canal sans fil est effectuée en utilisant une technique des moindres carrés.

**6.** Système selon la revendication 5, dans lequel la technique des moindres carrés est mise en oeuvre en utilisant une transformée de Fourier discrète.

**7.** Système selon la revendication 5, dans lequel la technique des moindres carrés est mise en oeuvre en utilisant un corrélateur cyclique unique.

**8.** Système selon la revendication 1, dans lequel la station de base transmet de manière efficace des données à un débit de 2 Mbps à l'équipement utilisateur.

**9.** Equipement utilisateur permettant une communication dans un format d'accès multiple par répartition en code, dans lequel l'équipement utilisateur reçoit K salves de communication, $K \geq 2$, dans une tranche de temps d'un système à spectre partagé, chaque salve ayant une séquence intermédiaire associée, dans lequel l'équipement utilisateur connaît les séquences intermédiaires des K salves, et dans lequel l'équipement utilisateur comporte une antenne permettant de recevoir les K salves de communication comportant un vecteur correspondant aux séquences intermédiaires transmises des salves ; un estimateur de canal permettant d'élaborer une matrice et d'estimer le canal sans fil entre la station de base et l'équipement utilisateur en fonction, en partie, de la matrice élaborée et du vecteur reçu ; et un détecteur de données permettant de récupérer des données des salves de communication reçues en utilisant le canal sans fil estimé, **caractérisé en ce que** :

ledit estimateur de canal est conçu pour élaborer la matrice utilisée pour estimer le canal sans fil en élaborant une matrice ayant K blocs de matrice circulante droite identiques en fonction en partie des K séquences intermédiaires connues.

10. Equipement utilisateur selon la revendication 9, dans lequel le détecteur de données est un détecteur multiutilisateur.

11. Equipement utilisateur selon la revendication 9, dans lequel le détecteur de données est un détecteur d'utilisateur unique.

12. Equipement utilisateur selon la revendication 9, dans lequel l'estimation du canal sans fil est effectuée en utilisant une technique des moindres carrés.

13. Equipement utilisateur selon la revendication 12, dans lequel la technique des moindres carrés est mise en oeuvre en utilisant une transformée de Fourier discrète.

14. Equipement utilisateur selon la revendication 12, dans lequel la technique des moindres carrés est mise en oeuvre en utilisant un corrélateur cyclique unique.

Fig. 1

Communication 16
Burst

| Data Burst | Midamble | Data Burst | Guard Period |
| --- | --- | --- | --- |
| 22 | 20 | 24 | 18 |

Fig. 2

Fig. 3

Construct a model of the received midamble sequence data, $\bar{r}$, the channel response, $\bar{h}$, and the known midamble codes, such as

$$\left[\sum_{k=1}^{K} M^{(k)}\right]\bar{h} = \bar{r}$$

50

Reconfigure the model by replacing the known midamble codes with K right circulant matrix blocks, B, such as

$$\left[\sum_{k=1}^{K} M^{(k)}\right] = \begin{bmatrix} B \\ B \\ \vdots \\ B \end{bmatrix}$$

52

Solve the reconfigure model using a least squares solution, such as by a discrete fourier transform or a single cyclic correlator solution

54

Fig. 4